# EUROPÄISCHE PATENTANMELDUNG

(11) **EP 1 020 116 A1**
(43) Veröffentlichungstag der Anmeldung: **19.07.2000**
(21) Anmeldenummer: 99126055.5
(22) Anmeldetag: 28.12.1999
(51) Int. Cl.: A21C 3/10, A21C 7/04, A21C 9/08

(54) **Herstellungsverfahren und -anordnung für Brötchen-Teiglinge**

(30) Priorität: 12.01.1999 DE 19900865
(71) Anmelder: A. FRITSCH GMBH & CO. KG, D-97348 Markt Einersheim (DE)
(72) Erfinder: Hoos, Josef, Dipl.-Ing., 97348 Markt Einersheim (DE)
(74) Vertreter: Götz, Georg, Dipl.-Ing.

(57) **Zusammenfassung**

Verfahren zur maschinellen Herstellung von rundgewirkten Teiglingen (41) für die Brötchenproduktion, ausgehend von geknetetem Teig, der zur einem Teigband (28) geformt wird, woraus mehrere einzelne Brötchen-Teigstücke (42) formgerecht herausgeschnitten werden, und die Teigstücke (42) mittels Rundwirken zu den Teiglingen (41) ausgebildet werden, die dann zur Weiterverarbeitung bereitgestellt oder abgesetzt werden, wobei nach dem Kneten des Teiges und vor dem Formen des Teigbandes (28) der geknetete Teig einer Vorgärung (2) unterworfen wird.

## Beschreibung

Die Erfindung betrifft ein Verfahren zur maschinellen Herstellung von rundgewirkten Teiglingen für die Brötchenproduktion, wobei gekneteter Teig als Ausgangsmaterial verwendet wird. Ferner betrifft die Erfindung eine maschinelle Teig- Aufarbeitungsanlage bzw. -anordnung von Teiglingen für die Brötchen-produktion entsprechend dem Herstellungsverfahren.

Knetmaschinen für die Teigbereitung, sowie vollautomatische Teig - Aufbereitungsanlagen als ,,Brötchenlinien" sind bekannt (vgl. Schünemann/Treu "Technologie der Backwarenherstellung", Gildebuch Verlag, 6. Auflage 1998, Seite 54 ff.). Eine wesentliche Funktionskomponente am Eingang einer solchen Aufarbeitungsanlage bildet ein kombinierter, integrierter Teigteil- und Wirkautomat als sogenannte Kopfmaschine. Diese übt folgende Funktionen aus:
- Messen und Abteilen von Teigstücken nach Volumen,
- Rundwirken der Teiglinge,
- Ablegen der Rundlinge auf ein Spreiz - Förderband, das aus auseinanderstrebenden Einzelbändern bestehen kann.
Die Rundlinge werden dann mit Hilfe einer Absetzvorrichtung auf Gärdielen gesetzt, bei maschineller Aufarbeitung werden sie in der Vorgärkammer einer Formanlage übergegeben.

Allerdings weist dieser Stand der Technik den Nachteil auf, dass beim Teigteilvorgang in der Kopfmaschine die Teigmasse starken mechanischen Belastungen ausgesetzt wird. Aus einem Teigstück für die Teilmaschine (sog. Presse) werden zur Teilung einzelne Teigstücke durch Scherung unter Beschädigung der Teigstrukturen mehr oder weniger gewaltsam herausgelöst. Dies mindert die Teigqualität erheblich. Nach dem Rundwirken der Stücke zu Rundlingen können diese nicht sofort weitergeformt werden. Sie müssen sich erst entspannen und wieder leicht angären. Dieser notwendige Schritt der Zwischengare zwischen der Kopfmaschine und der Formmaschine und/oder etwaiger Befeuchtungs- und Dekorierstationen verlangsamt den Teigdurchsatz bzw. erhöht den Geräteaufwand, um für eine Teig - Aufarbeitungsanlage einen kontinuierlichen Teigfluß aufrechterhalten zu können.

Aus DE-U-297 02-657 ist eine Vorrichtung zur Herstellung von bestreuten, viereckigen Teigstücken bekannt. Mit dieser wird Teigmasse vorgeformt und zu einem flachen Teigband ausgewalzt. Danach wird das Teigband in einzelne Stükke abgelängt. In einer Streueinrichtung, insbesondere einem Fein-Streubehälter ist noch eine Befeuchtungseinrichtung angeordnet.

Aus DE C 44 29 973 ist eine Vorrichtung zur Herstellung von Schnittbrötchen, Formgebäck und rustikalen Brötchen bekannt. In einer als Teigstrangformeinrichtung ausgebildeten Kopfmaschine werden aus einer größeren Teigmasse mehrere parallellaufende Teigbänder hergestellt und als viereckige Teigteile einer Rundwirkvorrichtung übergeben, dort rundgewirkt und über ein Förderband einem Gärschrank zugeführt.

Aus DE-A-197 23 414 ist ein Verfahren sowie ein Schneid- und Stanzwerkzeug zur Herstellung einzelner Teigstücke aus einem Teigband bekannt.

Schließlich sind Verfahren und Anlagen bzw. Anordungen der eingangs genannten Art bekannt: Aus DE-U-92 08 779.5 ist eine Einrichtung zum Formen von Teiglingen für Backwaren offenbart. Aus einem Teigbandformer gelangt Teigband zu einer Schneidstation, das dort in einzelne Teigbandabschnitte quergeschnitten wird. Diese werden einer Teig-/Formvorrichtung zugeführt, die daraus rundliche Teigstücke formt. Aus SCHRAMM Bernhardt, Maschinenlehre Backwaren, VEB Fachbuchverlag, Leipzig 1978, 2. Auflage, Seite 139-143 ist eine vollautomatische Teigteil- und Wirkmaschine für die Weizenkleingebäckherstellung offenbart. Sie dient zum Teilen, Wirken und Formen von Teigstükken, die zu Brötchen und anderem Weizenkleingebäck weiterverarbeitet werden. Der Teil-, Wirk-, und Formprozess erfolgt kontinuierlich zusammen mit dem Transport durch die Maschine. Die Eingabe des Teiges in die Maschine erfolgt entweder über ein Eingabeband oder einen Trichter. In einem Walzensystem wird der Teig zu einem gleichmäßig breiten, dicken und dichten Teigband gewalzt. Anschließend wird das Teigband in mehrere Rillen einer Rillenwalze gepreßt, wodurch mehrere Teigbänder entstehen. Ferner ist ein Abteilmechanismus nachgeschaltet, der mehrere Messer aufweist, wodurch mehrere Teigstücke gleichzeitig abgeschnitten werden. Nachdem die Teigstücke den Abteilmechanismus verlassen haben, gelangen sie in eine Wirkvorrichtung.

Dem gegenüber liegt der Erfindung die Aufgabe zugrunde, ein gattungsgemäßes Verfahren und eine entsprechende Anordnung dahingehend zu verbessern, dass die beim Kneten des Teiges auftretenden mechanischen Belastungen und Spannungen ausgeglichen werden können. Damit soll gleichzeitig die Notwendigkeit des Einsatzes chemischer Zutaten vermieden werden. Insbesondere soll der kontinuierliche Teigfluß innerhalb der Kette ,,Teigbandformen-, Herausschneiden- Rundwirken" nicht unterbrochen oder gestört und eine konstruktiv einfache Bauweise der Gesamtanlage realisierbar sein.

Zur Lösung wird bei einem Verfahren mit den eingangs genannten Merkmalen erfindungsgemäß vorgeschlagen, dass nach dem Kneten des Teiges und vor dem Formen des Teigbandes der geknetete Teig einer Vorgärung unterworfen wird. Dies kann beispielsweise in einem Kessel erfolgen, der zwischen dem Kneter und einem Teigbandformer hin- und herbewegbar ist. Durch die entsprechende Teigruhe läßt sich vorteilhaft eine etwaige Überknetung ausgleichen.

Im Rahmen der allgemeinen erfinderischen Idee liegt auch die Lösung, bei einem Verfahren zur maschinellen Herstellung von rundgewirkten Teiglingen für die Brötchenproduktion den gekneteten Teig zu einem Teigband zu formen, daraus mehrere einzelne Brötchen-Teigstücke formgerecht herauszuschneiden, wobei diese Teigstücke auseinanderbewegt und/oder positioniert werden, und/oder ihnen ein Abstand voneinder zu erteilen und die Teigstücke mittels Rundwirken zu den Teiglingen auszubilden, die dann zur Weiterverarbeitung bereitgestellt oder abgestellt werden.

Beim oder nach dem Herausschneiden werden diese Teigstücke auseinanderbewegt oder sonstwie positioniert. Die Erfindung umfaßt also das Grundprinzip, aus einem kontinuierlichen Teigband für Brötchenformen geeignete Stücke herauszuschneiden, rund oder lang zu wirken und dann abzusetzen. Da ein durch Ausrollen erzeugtes, kontinuierliches Teigband durch eine verhältnismäßig geringe Dicke charakterisiert ist, kann diese Dicke mittels an sich bekannter Schneidstationen leicht und mit wenig Krafteinwirkung durchschnitten werden. Es brauchen nur geringe Scherkräfte aufgebracht zu werden, um die Teigstükke zu erzeugen, sodass die Teigstruktur schädigende, mechanische Krafteinwirkungen, wie beim Teigteilen, nach dem Stand der Technik entfallen können. Durch das weitgehend streßfreie Ausschneiden von Teigstücken aus einem flachen Teigband entfällt die Notwendigkeit einer Zwischengare, die Teigstücke können vielmehr unmittelbar in Rundwirk- bzw. Schleifmaschinen zu Rundlingen weiterverarbeitet werden. Ein besonderer gerätetetechnischer Aufwand sowie Zeitverzögerungen für eine Zwischengare sind bei der Erfindung nicht mehr erforderlich. Dies gilt insbesondere dann, wenn zum streßfreien Formen des Teigbandes eine an sich bekannte Teigausrollmaschine in Satellitenkopf - Technik verwendet wird. Diese zeichnet sich durch besonders schonende Teigbearbeitung und -behandlung aus.

Mit der allgemeinen erfinderischen Idee läßt sich die Aufgabe lösen, ein System zur maschinellen Herstellung von Teiglingen für die Brötchenproduktion zu schaffen, das sich durch eine hohe Teiglingsqualität, einen verminderten gerätetechnischen Aufwand sowie durch einen erhöhten Teigdurchsatz bzw. eine erhöhte Produktionsgeschwindigkeit auszeichnet. Ferner wird die Möglichkeit eröffnet, vor gegarte bzw. sehr weiche Teige verarbeiten zu können.

Die Schonung des Teigs bei seiner Verarbeitung wird noch weiter dadurch gefördert, daß nach einer Ausbildung der Erfindung bei der Bildung des Teigbandes zweistufig vorgegangen wird: In einer ersten Stufe wird eine Vorformung vorgenommen, beispielsweise mittels eines an sich bekannten Teigbandformers (vgl. beispielsweise GB 652 550 oder WO 98/21 970). Wenn die aus dem Teigbandformer herausgelangende Teigbahn noch eine zu hohe Teigstärke aufweist, ist der Einsatz der zweiten Stufe zweckmäßig, nämlich mittels einer Teigausrollmaschine das Teigband auf eine gewünsche Endteigstärke zu reduzieren. Damit dies vor allem für die Teigstruktur streßfrei erfolgen kann, sind an sich bekannte Satellitenwalzen - Abrollsysteme, ,,Satellitenkopfmaschinen" genannt zweckmäßig (vgl. DE - Gebrauchsmuster 295 02 209.4). Eine weitere Reduzierung der Teigbandstärke kann mittels eines an sich bekannten Querwalzwerkes erfolgen (vgl. Internationale Patentanmeldung WO 98/07 323).

Zur Einsparung von Teigrohstoffen ist eine möglichst restteigfreie Teigverarbeitung anzustreben. Dem dient eine besonders vorteilhafte Ausbildung der Erfindung, wonach die Teigstücke aus dem Teigband als Vierecke, insbesondere Quadrate, restteigfrei herausgeschnitten werden. Dies lässt sich in einfacher Weise durch Kombination einer Längsschneidstation mit einer Querschneidstation bewerkstelligen, wobei ein Auseinanderspreizen der aneinander grenzenden Teigstücke voneinander mittels einer Positioniereinrichtung oder divergierender Förderbänder zweckmäßig ist.

Zur Lösung der obigen Erfindungsaufgabe wird im Rahmen der allgemeinen erfinderischen Idee eine maschinelle Teigaufarbeitungsanlage zur Bildung von Teiglingen für die Brötchenproduktion zwecks Durchführung des oben erläuterten Verfahrens vorgeschlagen, die sich durch die Anordnung folgender Funktionskomponenten in der Reihenfolge auszeichnet:
a) Teigausrollmaschine zur Formung eines Teigbandes aus geknetetem Teig
b) Querschneidstation, kombiniert mit einer Teigstück - Positioniereinrichtung, zur Bildung vereinzelter und/oder voneinander beabstandeter Teigstücke
c) Rundwirkmaschine zur Weiterverarbeitung der einzelnen Teigstücke zu Brotoder Brötchen-Teiglingen
d) ein oder mehrere Absetzmittel am Ausgang der Rundwirkmaschine zur Bereithaltung der Teiglinge

Da die erfindungsgemäße Teig - Aufarbeitungsanlage eingangsseitig auf geknetetem Teig abgestellt ist, besteht eine zweckmäßige Ausgestaltung darin, eine Kneteinrichtung der Teigausrollmaschine und gegebenenfalls der Vorgärzone vorzuschalten. Zur Erzielung einer kompakten Baueinheit und -form wird in weiterer Ausgestaltung der Erfindung vorgeschlagen, daß die Vorgärzone und die Kneteinrichtung gemeinsam in einer baulichen Einheit als integrierte Knetanlage zusammengefaßt sind, die der Teigausrollmaschine und gegebenenfalls einem Vor-Teigbandformer vorgeschaltet ist. In analoger Weise lassen sich nach einer anderen Ausbildung der Erfindung wenigstens die Querschneidstation und die Rundwirkmaschine gemeinsam in einer baulichen Einheit als integrierte Brot- oder Brötchenbearbeitungslinie kompakt zusammenfassen. In dieser Baueinheit kann noch zusätzlich die genannte Positioniereinrichtung oder ein Teil davon integriert sein.

Weitere Einzelheiten, Merkmale, Vorteile und Wirkungen auf der Basis der Erfindung ergeben sich aus der nachfolgenden Beschreibung bevorzugter Ausführungsformen der Erfindung sowie aus den Zeichnungen. Diese zeigen in:
- Figur 1: ein schematisches Flußdiagramm für die einzelnen Verfahrens schritte nach der Erfindung,
- Figur 2: ein schematisches Flußdiagramm für die einzelnen Verfahrens schritte nach dem vorbekannten Stand der Technik,
- Figur 3.1: eine schematisch dargestellte Draufsicht auf den auf einem TeigFörder- band stattfindenden Teigfluss unter Durchführung des erfindungsgemäßen Verfahrens, Teig-Aufarbeitungsanlage zur Durchführung des in der linken Hälfte dargestellten Verfahrens,
- Figur 3.2: eine Fortsetzung der Darstellung in Figur 3.1 nach dem dort gezeigten Schritt ,,spreizen".
- Figur 4.1: eine grob dargestellte Längsseitenansicht auf die erfindungsgemäße Teig- Aufarbeitungsanlage zur Durchführung des in Figuren 3.1 und 3.2 dargestellten Verfahrens
- Figur 4.2: eine Fortsetzung der Darstellung nach Figur 4.1 nach dem dort gezeigten Spreiztisch 13.

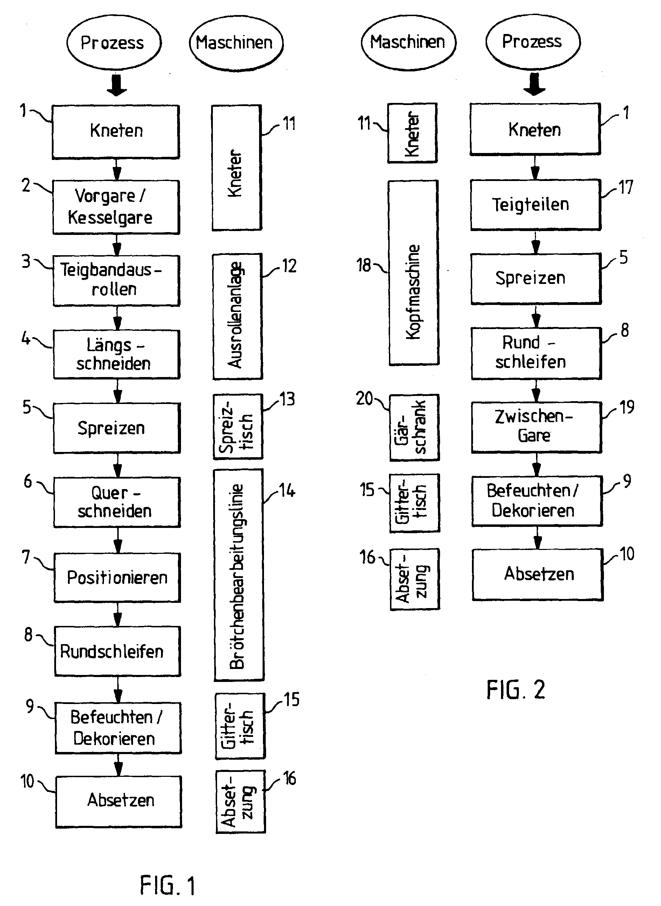

Gemäß Ausführungsbeispiel nach Figur 1 läßt sich der erfindungsgemäße Herstellungsprozess in die Verfahrensschritte 1 - 10 untergliedern. Der Inhalt jedes Verfahrensschritts ist mit einem kurzen Stichwort angegeben, das für den Fachmann keiner zusätzlichen Erläuterung bedarf. Die ersten beiden Verfahrensschritte 1 (Kneten) und 2 (Vorgare/Kesselgare) lassen sich in der gemeinsamen Baueinheit 11 ,,Kneter" einrichten und durchführen. Die Teiggärung kann dabei in einem Kessel oder Bottich erfolgen. Wie mit der weiteren Baueinheit 12 ,,Ausrollanlage" angedeutet, ist auch eine bauliche Zusammenfassung der Verfahrensschritte 3 ,,Teigband ausrollen" und 4 ,,Längsschneiden" in einer gemeinsamen Baueinheit zweckmäßig. Der Verfahrensschritt 5 ,,spreizen" kann über einen an sich bekannten Spreiztisch 13 erfolgen. Die Verfahrensschritte 6 ,,Querschneiden", 7 ,,Positionieren" und 8 ,,Rundschleifen" lassen sich in der gemeinsamen Baueinheit 14 ,,Brötchenbearbeitungslinie" zusammenfassen. Der Verfahrensschritt 9 ,,Befeuchten/Dekorieren" lässt sich auf einem Gittertisch 15 durchführen. Für den Verfahrensschritt 10 ,,Absetzen" stehen Absetzvorrichtungen 16 gemäß Stand der Technik (vgl. Schünemann/Treu a. a. O., Seite 59) zur Verfügung.

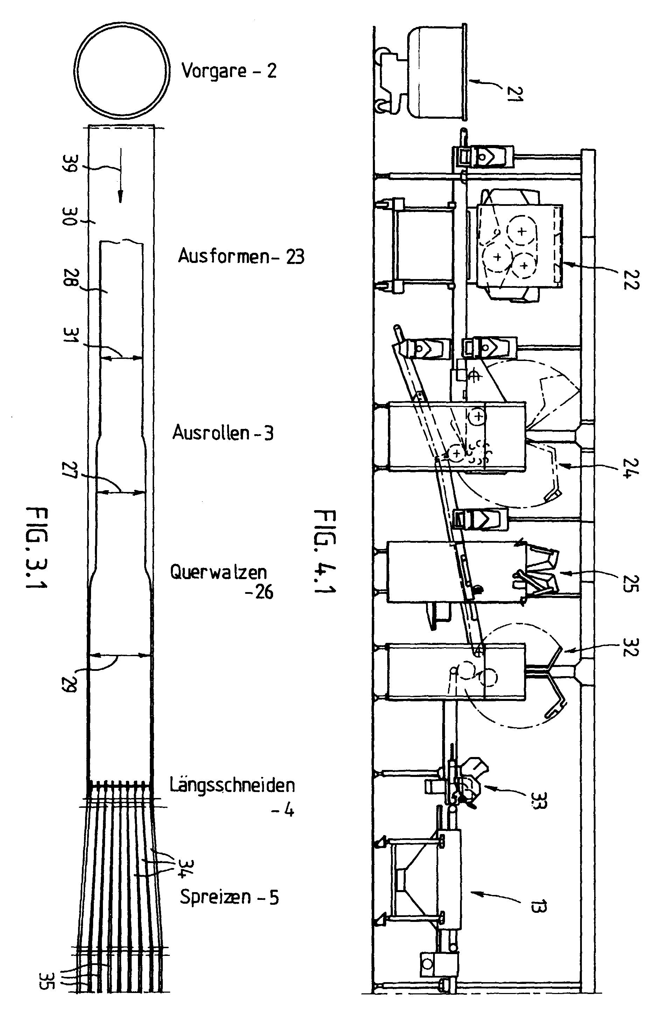

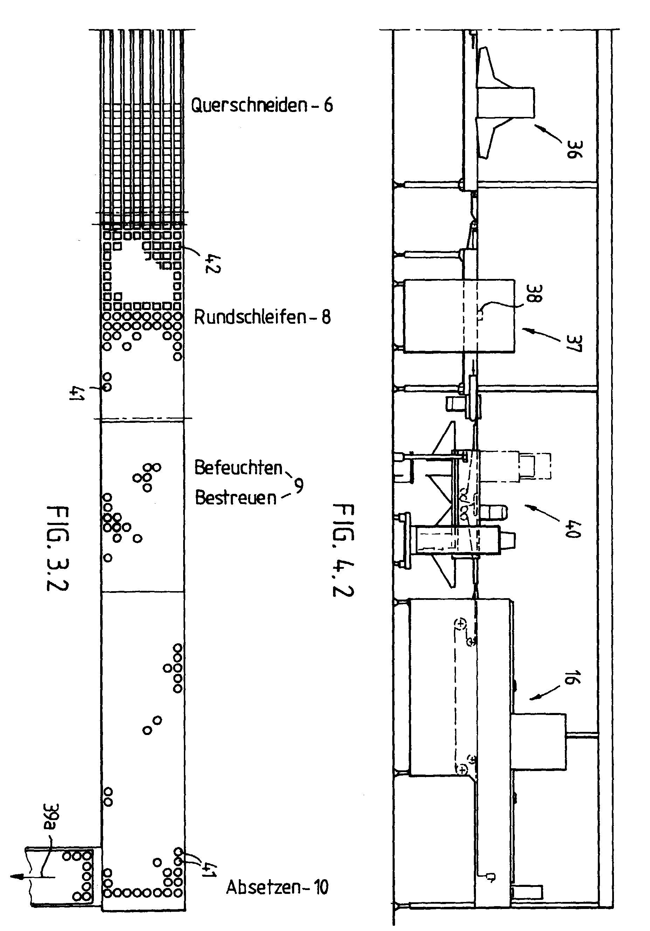

Bei der aus dem Stand der Technik überkommenen Brötchenlinie gemäß Figur 2 sind die mit der Erfindung gemäß Figur 1 übereinstimmenden Verfahrensschritte und Maschinenkomponenten mit identischen Bezugsziffern versehen. Im Unterschied zur Erfindung findet der Verfahrensschritt 17 ,,Teigteilen" statt, der bereits die oben angesprochene Minderung der Teigqualität mit sich bringt. Dieser Verfahrensschritt ist zusammen mit den Verfahrensschritten 5 ,,Spreizen" und 8 ,,Rundschleifen" in einem gemeinsamen Teigteil- und Wirkautomaten, der sogenannten Kopfmaschine 18 realisiert, welche an ihrem Ausgang Rundlinge ausstößt (vgl. Schünemann/Treu a.a.O., Seite 58 und 59). Eine solche Kopfmaschine findet nach der Erfindung keine Anwendung. Allerdings müssen nach dem Stand der Technik - im weiteren wesentlichen Unterschied zur Erfindung - die ausgestoßenen Rundlinge einer Zwischengare unterzogen werden, um insbesondere ein Reißen der Teigoberfläche und eine Rückformung der Teiglinge zu verhindern. Dieser Verfahrensschritt 19 ,,Zwischengare", welcher den kontinuierlichen Teig-fluss stört und zudem zur Realisierung der Zwischengärzone einen aufwendig angepaßten Gärschrank 20 erfordert, ist nach der Erfindung gemäß Figur 1 und nachfolgend beschriebenen Figuren 3 und 4 vermieden.

Gemäß Figuren 3.1 und 4.1 wird der geknetete Teig zunächst dem Verfahrensschritt 2 ,,Vorgare", wie oben beschrieben, unterworfen. Als Gerätschaft dafür eignen sich, wie in Figur 4.1 angedeutet, ein Kessel oder Bottich 21. Von diesem gelangen vorgegärte Teigklumpen oder sonstige Teigmassen in einen Teigbandformer 22 (an sich bekannt z. B. aus WO 98/21 970), worin der Verfahrensschritt 23 ,,Teig ausformen" stattfindet. Er bildet einen Vorformschritt für den nachfolgenden Verfahrensschritt 3 ,,Teigband ausrollen" wofür im Rahmen der Erfindung eine an sich bekannte Satellitenkopfmaschine 24 (vgl. DE-Gebrauchsmuster 295 02 209.4) eingesetzt wird. Dieser ist ein an sich bekanntes Querwalzwerk 25 (vgl. WO 98/07 323) unmittelbar nachgeordnet, womit der Verfahrensschritt 26 ,,querwalzen" durchgeführt wird. Dadurch wird die mittels der Satellitenkopfmaschine 24 erzeugte Ausrollbreite 27 des Teigbandes 28 auf eine Endbreite 29 knapp innerhalb der Breite des Teigförderbandes 30 erhöht. Im Vorformschritt bzw. Ausformschritt 23 ist das Teigband 28 mit einer ersten Breite 31 aus dem Teigbandformer erzeugt worden. Über eine Zwischenstation 32 wird das quergewalzte Teigband einer Längsschneidstation 33 zur Durchführung des Verfahrensschrittes 4 ,,längsschneiden" zugeführt. Die dabei entstehenden einzelnen Längsstreifen 34 müssen für die weitere Verarbeitung voneinander einen jeweiligen Seitenabstand 35 (vgl. Figur 3.2) aufweisen. Um diesen herzustellen, wird der Verfahrensschritt 5 ,,spreizen" durchgeführt, zu dessen Realisierung der bereits oben genannte Spreiztisch 13 eingesetzt wird. Dieser kann beispielsweise mit auseinanderstrebenden Einzelbändem (vgl. Schünemann/Treu a.a.O., Seite 59) realisiert sein.

Gemäß der Fortsetzung durch Figur 4.2 ist dem Spreiztisch 13 eine Querschneidstation 36 im Rahmen der Gesamtanlage nachgeschaltet. Dabei erfolgt der Verfahrensschritt ,,querschneiden", wodurch restteigfreie Rechteck-Teigstücke 42 herausgeschnitten werden.Dem Spreiztisch 13 wiederum ist eine Wirkmaschine 37 zur Durchführung des Verfahrensschrittes 8 ,,rundschleifen" nachgeordnet. Diese ist mit mehreren Wirkorganen 38 beispielsweise in Tellerform versehen, die in einer Reihe nebeneinander angeordnet sind, die quer zur Teigförder- bzw. -flußrichtung 39 (vgl. Figur 3.1) verläuft. Die Anzahl der Wirkorgane 38 entspricht der Anzahl der Längsstreifen 34, d. h. jedem Längsstreifen 34 kann innerhalb der Querreihe ein Wirkorgan 38 zugeordnet sein. Diese erzeugen aus den rechteckigen Teigstücken 42 rundliche Teiglinge 41 für eine nachfolgende Brötchen-Aufbereitung. Der Wirkmaschine 37 folgt in der Teigflußrichtung 39 eine Befeuchtungs- und Bestreustation 40 für die Verfahrensschritte 9 ,,befeuchten/bestreuen (dekorieren)" nach. Den Abschluß der erfindungsgemäßen Teig - Aufarbeitungsanlage bildet die Absetzvorrichtung 16 für den Verfahrensschritt 10 ,,absetzen", wobei die erste Teigflußrichtung 39 um 90° in die zweite 39 a geändert wird. Absetzvorrichtungen sind an sich aus dem Stand der Technik bekannt (vgl. Schünemann/Treu a.a.O., Seite 59).

### Bezugszeichenliste:

- 1 - 10: Verfahrensschritte
- 11: Kneter
- 12: Ausrollanlage
- 13: Spreiztisch
- 14: Brötchenbearbeitungslinie
- 15: Gittertisch
- 16: Absetzvorrichtung
- 17: Verfahrensschritt ,,Teigteilen"
- 18: Kopfmaschine
- 19: Zwischen - Gare
- 20: Gärschrank
- 21: Kessel
- 22: Teigbandformer
- 23: Teig ausformen
- 24: Satellitenkopfmaschine
- 25: Querwalzwerk
- 26: Querwalzen
- 27: Ausrollbreite
- 28: Teigband
- 29: Endbreite
- 30: Teigförderband
- 31: erste Breite
- 32: Zwischenstation
- 33: Längsschneidstation
- 34: Längsstreifen
- 35: Seitenabstand
- 36: Querschneidstation
- 37: Wirkmaschine
- 38: Wirkorgan
- 39-39a: Teigflußrichtung
- 40: Befeuchtungs- und Bestreustation
- 41: Teigling
- 42: Teigstücke

## Patentansprüche

1. Verfahren zur maschinellen Herstellung von rundgewirkten Teiglingen (41) für die Brötchenproduktion, ausgehend von geknetetem Teig, der zu einem Teigband (28) geformt wird, woraus mehrere einzelne Brötchen-Teigstücke (42) formgerecht herausgeschnitten werden, und die Teigstükke (42) mittels Rundwirken zu den Teiglingen (41) ausgebildet werden, die dann zur Weiterverarbeitung bereitgestellt oder abgesetzt werden, **dadurch gekennzeichnet, dass** nach dem Kneten des Teiges und vor dem Formen des Teigbandes (28) der geknetete Teig einer Vorgärung (2) unterworfen wird.

2. Verfahren nach Anspruch 1, dadurch gekennzeichnet, dass die herausgeschnittenen Teigstücke (42) auseinander bewegt und/oder positioniert werden, und/oder ihnen ein Abstand (35) voneinander erteilt wird.

3. Verfahren nach Anspruch 1 oder 2, dadurch gekennzeichnet, dass zur Teigband-Formung der geknetete Teig ausgerollt (3) wird.

4. Verfahren nach Anspruch 3, dadurch gekennzeichnet, dass unmittelbar vor dem Ausrollen (3) der Teig vorgeformt (23) und dabei eine bandartige Grundgestalt erhält.

5. Verfahren nach einem der vorangehenden Ansprüche, gekennzeichnet durch wenigstens einen Querwalzschritt oder -prozess (26) bei der Teigband-Formung.

6. Verfahren nach einem der vorangehenden Ansprüche, dadurch gekennzeichnet, dass zur Bildung der Brötchen-Teigstücke (42) das geformte Teigband in mehrere nebeneinander liegende Teigstreifen (34) in seiner Längs- und Querrichtung geschnitten wird, wobei die Teigstreifen(34) oder Teigstücke (42) auseinander bewegt oder vereinzelt und/oder mit Abstand (35) voneinander positioniert werden, bevor sie mittels Rundwirken (7) weiterverarbeitet werden.

7. Verfahren nach einem der vorangehenden Ansprüche, dadurch gekennzeichnet, dass nach dem Rundwirken (7) und vor dem Absetzen (10) die Teiglinge (41) befeuchtet und/oder dekoriert werden.

8. Verfahren nach einem der vorangehenden Ansprüche, dadurch gekennzeichnet, dass die Teigstücke (42) aus dem Teigband (28) restteigfrei als Vierecke, insbesondere Quadrate, herausgeschnitten werden.

9. Maschinelle Teigaufarbeitungsanordnung zur Bildung von Teiglingen (41) für die Brötchenproduktion nach dem Verfahren gemäß einem der vorangehenden Ansprüche, wobei folgende Funktionskomponenten in der Reihenfolge kombiniert sind:
a) eine Vorgärzone (21) für gekneteten Teig
b) eine Teigausrollmaschine (12;24) zur Formung eines Teigbandes (28) aus geknetetem Teig
c) eine Längs- und/oder Querschneidstation (33,36) zur Bildung von separaten Teigstreifen oder Teigstücken (42),
d) eine Rundwirkmaschine (14;37) zur Weiterverarbeitung der einzelnen Teigstücke (42) zu Brötchen-Teiglingen (41)
e) ein oder mehrere Absetzmittel (16) am Ausgang der Rundwirkmaschine (14;37) zur Bereithaltung der Teiglinge (41).

10. Teigaufarbeitungsanordnung nach Anspruch 9, dadurch gekennzeichnet, dass die Längs- und Querschneidstation (33,36) mit einer Teigstück-Positioniereinrichtung zur Bildung vereinzelter und/oder voneinander beabstandeter Teigstücke (42) kombiniert ist.

11. Teigaufarbeitungsanordnung nach Anspruch 10, dadurch gekennzeichnet, daß die Positioniereinrichtung eine geschnittenes Teigband (28,34) oder einzelne Teigstücke (42) erfassende Spreizeinrichtung (13) aufweist, die zwischen der Längs- und Querschneidstation (33,36) angeordnet oder beiden nachgeordnet ist.

12. Teigaufarbeitungsanordnung nach Anspruch 9, 10 oder 11, gekennzeichnet durch eine der Teigausrollmaschine (12;24) und der Vorgärzone (21) vorgeschaltete Kneteinrichtung.

13. Teigaufarbeitungsanordnung nach Anspruch 12, dadurch gekennzeichnet, dass die Vorgärzone (21) und die Kneteinrichtung gemeinsam innerhalb einer baulichen Einheit als integrierte Knetanlage (11) zusammengefasst sind, die der Teigausrollmaschine (12,24) vorgeschaltet ist.

14. Teigaufarbeitungsanordnung nach einem der vorangehenden Ansprüche, dadurch gekennzeichnet, dass unmittelbar vor der Teigausrollmaschine (12;24) ein Teigband-Grund- oder -Vorformer (22) angeordnet ist.

15. Teigaufarbeitungsanordnung nach einem der vorangehenden Ansprüche, gekennzeichnet durch ein Teig-Querwalzwerk (25), das dem Teigbandformer (22) und/oder der Teigausrollmaschine (12;24) nachgeschaltet ist.

16. Teigaufarbeitungsanordnung nach einem der vorangehenden Ansprüche, dadurch gekennzeichnet, dass die Querschneidstation (36) zwischen der Längsschneidstation (33) und der Rundwirkmaschine (37) angeordnet ist.

17. Teigaufarbeitungsanordnung nach Anspruch 16, dadurch gekennzeichnet, dass wenigstens die Querschneidstation (36) und die Rundwirkmaschine (37) gemeinsam in einer baulichen Einheit als integrierte Brötchenbearbeitungslinie (14) zusammengefasst sind.

18. Teigaufarbeitungsanordnung nach einem der vorangehenden Ansprüche, dadurch gekennzeichnet, dass die Rundwirkmaschine (37) mehrere Rundwirkorgane (38) aufweist, die in einer Reihe nebeneinander quer zur Teigband-Längsrichtung und/oder einer Teigförderrichtung (39) angeordnet und je einer Reihe von in der Teigband-Längsrichtung oder in einer Teig-Förderrichtung (39) hintereinander gereihten, vereinzelt geschnittenen Teigstücken (42) zugeordnet sind.

19. Teigaufarbeitungsanordnung nach Anspruch 18, dadurch gekennzeichnet, dass die Rundwirkmaschine (37) eine Mehrzahl einzelner, nebeneinander laufender Förderbänder aufweist, die je eine Längsreihe der Teigstücke (42) tragen und je einem Rundwirkorgan (38) zugeordnet sind.

20. Teigaufarbeitungsanordnung nach einem der vorangehenden Ansprüche, gekennzeichnet durch eine Befeuchtungs- und/oder Bestreustation (40) zwischen der Rundwirkmaschine (37) und dem oder den Absetzmitteln (10,16).

21. Teigaufarbeitungsanordnung nach einem der vorangehenden Ansprüche, dadurch gekennzeichnet, dass die Teigausrollmaschine (12;24) mittels einer an sich bekannten Satellitenkopfmaschine (24) realisiert ist.
